# EUROPÄISCHE PATENTSCHRIFT

(11) **EP 2 340 360 B1**
(45) Veröffentlichungstag und Bekanntmachung des Hinweises auf die Patenterteilung: **29.05.2013**
(21) Anmeldenummer: 09799488.3
(22) Anmeldetag: 27.10.2009
(51) Int. Cl.: F01L 1/047, B21D 53/84, B23P 15/00, B23P 11/00, F16H 53/02

(54) **NOCKENWELLE UND HERSTELLVERFAHREN HIERZU**
CONSTRUCTED CAMSHAFT AND METHOD OF MANUFACTURING
ARBRE A CAMES ASSEMBLÉ ET MÉTHODE DE FABRICATION

(30) Priorität: 29.10.2008 DE 102008053723
(43) Veröffentlichungstag der Anmeldung: 06.07.2011
(73) Patentinhaber: Neumayer Tekfor Holding GmbH, 77756 Hausach (DE)
(72) Erfinder: SCHULER, Markus, 77709 Oberwolfach (DE); KÜMPEL, Renald, 98617 Herpf (DE)
(86) Internationale Anmeldenummer: PCT/DE2009/001507
(87) Internationale Veröffentlichungsnummer: WO 2010/048937

(56) Entgegenhaltungen:
- EP-A1- 0 292 795
- WO-A1-99/35373
- WO-A1-2006/012959
- DE-A1- 3 128 522
- DE-A1- 4 201 473
- DE-A1- 19 710 847
- DE-A1-102004 002 301

## Beschreibung

Die Erfindung betrifft eine Nockenwelle mit axial festen und axial verlagerbaren Nockenteilen gemäß dem Oberbegriff des ersten Anspruchs.

Derartige Nockenwellen sind insbesondere aus Brennkraftmaschinen bekannt, in denen der Gaswechsel von Verbrennungszylindern gesteuert wird, indem auf der Nockenwelle angeordnete Nockenteile federbelastete Ein- und Auslassventile axial betätigen. Abhängig von der Anzahl der Ventile besitzen die Nockenteile entsprechende Nocken, die bei einer Verdrehung der Nockenwelle die einzelnen Ventile beaufschlagen. Dabei sind in modernen Brennkraftmaschinen zwei Nockenwellen wirksam, von denen eine die Auslassventile und die andere die Einlassventile steuert oder mit mehreren Nockenwellen sowohl Ein- und Auslassventile gesteuert werden.

Zur Einsparung von Treibstoff kann vorgesehen werden, einzelne Zylinder der Brennkraftmaschine unter bestimmten Betriebsbedingungen eines Kraftfahrzeugs, beispielsweise im Leerlauf, im Teillastbetrieb oder im Schubbetrieb abzuschalten. Dabei sollen gezielt bestimmte Ventile unbetätigt, das heißt, geschlossen bleiben, während die übrigen Ventile ihre Funktion beibehalten. Hierzu ist bekannt, einzelne Nockenteile mittels eines Stellantriebs axial zu verlagern, wobei abhängig von der Zündfolge der einzelnen Zylinder und den ausgewählten abzuschaltenden Zylindern sich axial fest angeordnete und axial verlagerbare abwechseln können. Eine Nockenwelle mit axial fest angeordneten und axial verschiebbaren Nocken zeigt die Offenlegungsschrift DE 42 01 473 A1.

Aufgabe der Erfindung ist, eine Nockenwelle und ein Verfahren zu deren Herstellung vorzuschlagen, die eine abwechselnde Anordnung von axial festen und axial verlagerbaren Nockenteilen ermöglicht.

Die Aufgabe wird durch eine Nockenwelle gemäß den Merkmalen des ersten Anspruchs gelöst. Mit einer derart ausgestalteten Nockenwelle wird weiterhin das Problem gelöst, axial fest angeordnete und axial längs eines Längsprofils verlagerbare Nockenteile an unterschiedlichen Positionen des Wellengrundkörpers anzuordnen, wobei axial verlagerbare und axial feste Nockenteile jeweils über die Aufnahmebereiche eines anderen Nockenteils gebracht werden müssen. Dabei soll eine hohe Anzahl von Gleichteilen erzielt werden.

Die Nockenwelle kann zur Steuerung der Einlass- oder der Auslassventile verwendet werden. Eine Brennkraftmaschine kann daher mit mehreren Nockenwellen nach dem vorgeschlagenen Prinzip ausgestattet sein, beispielsweise kann eine Brennkraftmaschine mit V-förmig angeordneten Zylindern vier erfindungsmäße Nockenwellen enthalten. Bei dem Wellengrundkörper handelt es sich bevorzugt um eine Vollwelle oder eine Hohlwelle beziehungsweise einen Rohrabschnitt, wobei die Nockenteile bevorzugt eine einzige Öffnung zur Aufnahme am Wellengrundkörper aufweisen. Vor oder nach dem Aufbringen der Nockenteile kann ein bevorzugt fertigbearbeitetes Wellenendstück, das beispielsweise Antriebselemente für die Nockenwelle enthält, aufgebracht werden.

Von der Erfindung sind auch weitere Fügeteile der Nockenwelle umfasst, die entsprechend den Nockenteilen vorbereitet und gefügt werden können. Unter diesen Fügeteilen sind beispielsweise Lagerringe, Pumpennocken zum Antrieb von Pumpen wie Öl-, Wasser- und/oder Kraftstoffpumpen, Geberräder beispielsweise zur Erfassung der Nockenwellendrehzahl, Antriebsräder zum Antrieb der Nockenwelle zwischen den Enden der Nockenwelle, Ausrichtringe und/oder dergleichen zu verstehen. Dabei können die Fügeteile zwischen zwei gefügten Nockenteilen, zwei axial verlagerbaren Nockenteilen, zwischen einem gefügten und einem axial verlagerbaren Nockenteil und/oder zwischen einem Wellenendstück und einem gefügten oder axial verlagerbaren Nockenteil vorgesehen sein.

Zur Beaufschlagung mehrerer Ventile eines Zylinders können insbesondere die gefügten Nockenteile als einzelne, jeweils ein Ventil beaufschlagende Nockenteile ausgebildet sein, die axial beabstandet separat auf dem Wellengrundkörper oder einem auf diesem aufgebrachten Teil gefügt sind. Zwischen derartigen Nockenteilen kann ein Lagerring und/oder ein anderes Fügeteil gefügt sein. In vorteilhafter Weise sind die mehrere Nocken für mehrere zu betätigende Ventile eines Zylinders enthaltenden axial verlagerbaren Nockenteile als Baueinheit ausgeführt.

Insbesondere aus Gründen der Verunreinigung der Nockenwelle werden die Nockenteile und gegebenenfalls der Lagerring bevorzugt zumindest an ihrer Fügefläche fertig bearbeitet auf den bereits fertig bearbeiteten Wellengrundkörper aufgebracht. Auf diese Weise kann sowohl die Qualität des Fügeprozesses als auch die Ausgangsqualität der Nockenwelle gesteigert werden.

### In vorteilhafter

Weise wird dabei ein einziges Längsprofil auf den Wellengrundkörper aufgebracht, beispielsweise gewalzt, dass eine durchgehende Steigung aufweist. Das Längsprofil kann hierbei eine Längsverzahnung sein.

Alternativ kann vorgesehen werden, dass in den Wellengrundkörper für die einzelnen Aufnahmebereiche der axial verlagerbaren Nockenteile abgestufte Längsverzahnungsbereiche mit zunehmendem, über einen Längsverzahnungsbereich jeweils konstantem Durchmesser eingebracht werden. Hierbei können für die gefügten Nockenteile ebene Fügeflächen an dem Wellengrundkörper vorgesehen sein, während bei durchgehendem Längsprofil die Nockenteile auf dem Außendurchmesser des konischen Längsprofils gefügt werden.

Das Fügen der Nockenteile erfolgt dabei vorzugsweise in Form eines Pressvorgangs, wobei ein Nockenteil jeweils mittels einer Axialbewegung auf die Pressfläche des Wellengrundkörpers aufgepresst wird. Dabei kann das Innenprofil des Nockenteils über dessen axiale Länge einen konstanten Durchmesser aufweisen, so dass bei einem Fügen auf dem konischen Längsprofil eine teileweise plastische Verformung des Längsprofils in vorgesehener Weise eintritt.

Die Steigung des Konus wird dabei so eingestellt, dass ein Innenprofil des axial verlagerbaren Nockenteiles mit über den axialen Verlauf konstantem Durchmesser ausgestaltet werden kann und dabei ausreichend Profilüberlagerung mit dem Längsprofil in Drehrichtung während einer axialen Verlagerung zum Stillsetzen eines Zylinders beibehält. Es hat sich gezeigt, dass eine Steigung des Konus des Längsprofils zwischen 0,01 und 0,001 vorteilhaft ist.

In einer weiteren vorteilhaften Ausführungsform einer Nockenwelle kann vorgesehen sein, dass der Wellengrundkörper mehrere Längsprofilabschnitte gleichen Außendurchmessers aufweist, wobei an einem Längsprofilabschnitt das zumindest eine axial verlagerbare Nockenteil und an einem weiteren Längsprofilabschnitt zumindest ein gefügtes Nockenteil mittels einer Zwischenhülse mit Radialspiel zu den Längsabschnitten und größerem Außendurchmesser als einem Innendurchmesser des Nockenteils gefügt ist. In vorteilhafter Weise sind hierbei alle Längsprofilabschnitte mit gleichem Durchmesser ausgestaltet, so dass der Wellengrundkörper einfach zu fertigen ist und sowohl die gefügten als auch die axial verlagerbaren Nockenteile jeweils Gleichteile sind.

In vorteilhafter Weise wird die Zwischenhülse zuerst auf den zum Fügen vorbestimmten Längsabschnitt gebracht und anschließend ein oder mehrere Nockenteile und gegebenenfalls zwischen diesen ein Lagerring und/oder zumindest ein weiteres Fügeteil durch einen Pressvorgang gefügt. Es kann dabei vorgesehen sein, dass die Zwischenhülse mit dem Längsprofilabschnitt beim Fügevorgang radial verpresst wird. Hierbei kann Material der Zwischenhülse in Ausschnitte des Längsprofilabschnitts wie Zahnlücken einer Längsverzahnung verdrängt werden. Entsprechend kann der Innenumfang der Zwischenhülse kreisrund ausgebildet sein. Alternativ kann die Zwischenhülse ein zu den Längsprofilabschnitten komplementäres Innenprofil aufweisen. In vorteilhafter Weise ist das Längsprofil sowie das gegebenenfalls in der Zwischenhülse vorgesehene Innenprofil eine Längsverzahnung. Die Außenfläche der Zwischenhülse und eine Innenfläche der gefügten Nockenteile kann feinbearbeitet, beispielsweise spanend bearbeitet sein. Zur Verbesserung des Fügeprozesses können diese Flächen geschliffen und/oder mit entsprechenden Fasen oder anderen Zentrier- und Einführmitteln zum Aufbringen der Nockenteile auf die Zwischenhülse versehen sein.

Gemäß dem erfinderischen Gedanken kann eine weitere vorteilhafte Ausführungsform einen Wellengrundkörper enthalten, der Aufnahmebereiche mit einem äußeren und einem inneren Durchmesser für die Nockenteile aufweist, wobei das zumindest eine axial verlagerbare Nockenteil auf einer auf dem äußeren Durchmesser vorgesehenen Längsverzahnung aufgenommen ist, zumindest ein Nockenteil auf dem inneren Durchmesser gefügt ist und die gefügten Nockenteile und die Aufnahmebereiche mit dem Längsprofil zueinander komplementäre radiale, über den Umfang verteilte Freimachungen aufweisen. Gemäß dieser Ausführung ist das Längsprofil für die axial verlagerbaren Nockenteile auf einem größeren Durchmesser angeordnet als die Aufnahmebereiche für die gefügten Nockenteile. Um diese beispielsweise in eine von zwei axial elastischen Nockenteilen umgebenen Fügeposition bringen zu können, weist das Längsprofil radiale Einschnitte oder Ausnehmungen auf, die über den Umfang verteilt sind und sich längs des Längsprofils erstrecken, so dass am zu fügenden Nockenteil vorgesehene, zu den durch die Freimachungen gebildeten Ausschnitte komplementäre, durch die an dem Nockenteil vorgenommenen Freimachungen verbleibenden radialen Materialanteile axial über das Längsprofil gebracht werden können. Diese Materialanteile bilden Innenumfangssegmente mit einer Pressfläche, die mit einer auf dem inneren Durchmesser des Wellengrundkörpers an der Fügeposition vorbereiteten Pressfläche einen Presssitz bilden. Die Pressfläche auf dem inneren Durchmesser kann gegenüber einem umgebenden Durchmesser des Wellengrundkörpers zumindest geringfügig erhaben sein. Zwischen zwei axial beabstandeten, gefügten Nockenteilen, die mit Nocken für denselben Zylinder vorgesehen sind, kann eine Lagerfläche an dem Wellengrundkörper angearbeitet sein oder ein Lagerring, beispielsweise durch Presssitz gefügt sein.

Eine weitere vorteilhafte Ausführungsform kann eine Nockenwelle vorsehen, deren Wellengrundkörper Aufnahmebereiche für das zumindest eine gefügte Nockenteil und für zumindest ein Hülsenteil mit einem an dessen Außendurchmesser vorgesehen Längsprofil aufweist. Darunter ist die Ausgestaltung des Wellengrundkörpers in der Weise zu verstehen, dass vorzugsweise mit gleichem Durchmesser ausgeführte Aufnahmebereiche für die gefügten und die axial verlagerbaren Nockenteile vorgesehen und feinbearbeitet, insbesondere geschliffen sind. Dabei werden die Nockenteile direkt auf die Aufnahmebereiche gefügt, während an den Aufnahmeflächen für die axial verlagerbaren Nockenteile Hülsenteile auf den Aufnahmeflächen gefügt werden, die über das Längsprofil wie die Längsverzahnung verfügen, auf denen die axial verlagerbaren Nockenteile mittels eines komplementären Innenprofils wie Innenverzahnung drehfest und axial verlagerbar aufgenommen sind. Die Innenflächen der gefügten Nocken, gegebenenfalls zusätzlich vorgesehener Fügeteile und/oder der Hülsenteile können kreisrund fertigbearbeitet, insbesondere geschliffen sein.

Dieses Ausführungsbeispiel hat den besonderen Vorteil, dass lediglich die Hülsenteile und die zugehörigen axial verlagerbaren Nockenteile verschleißfest ausgestaltet sein müssen, während der Wellengrundkörper aus gewöhnlichem Stahl hergestellt sein kann. Die gefügten Nockenteile müssen lediglich an den Laufflächen der Nocken verschleißfest ausgeführt sein. Dasselbe trifft auf die gegebenenfalls vorgesehenen Laufringe zu. Auf diese Weise können der Wellengrundkörper und die gefügten Nockenteile bezüglich ihrer Materialzusammensetzung primär auf den Fügeprozess angepasst werden.

Die Hülsenteile sowie die axial verlagerbaren Nockenteile werden aufgrund der hohen Belastung des Längsprofils und des Innenprofils verschleißfest durchgeführt. Diese können beispielsweise aus Nitrierstahl hergestellt und entsprechend nitriert oder carbonitriert sein. Vorteilhaft kann auch eine Teilhärtung des Längsprofils beziehungsweise des Innenprofils und der Nockenlaufbahnen sein. Alternativ oder zusätzlich können weitere Oberflächenbehandlungen vorgesehen sein.

Wie erwähnt müssen an den Wellengrundkörper keine speziellen Anforderungen gestellt werden. Dieser kann aus nicht legiertem Stahl wie ST 20 und besser oder auch niedrig legiertem Stahl, beispielsweise zur Erzielung einer besseren Korrosionsbeständigkeit, gebildet sein. Der Wellengrundkörper kann aus Vollmaterial gebildet oder aus Rohrmaterial hergestellt sein. Insbesondere eine Ausführung aus Rohrmaterial ermöglicht eine erhebliche Gewichtsersparnis insbesondere bei Ausgestaltung mehrerer Nockenwellen in der vorgeschlagenen Weise.

Die Erfindung wird weiterhin durch ein Verfahren zur Herstellung einer gebauten Nockenwelle gemäß den Merkmalen des dritten Anspruchs gelöst.

Unter zumindest am Fügedurchmesser fertig bearbeiteten Teilen sind alle formgebenden Verfahren einschließlich der notwendigen Reinigung zu verstehen, so dass die Teile bereits in einer den Restschmutzanforderungen genügenden Form für den Zusammenbau- und Fügeprozess bereitgestellt werden. In dem Verfahren sind dabei Verfahrensschritte vorgesehen, die Öffnungen in den Nockenteilen mit einem größeren oder gleichen Durchmesser wie des zu überfahrenden Bereichs des Längsprofils bereitstellen. Dabei sind die Maße an übliche Verfahren zur Bildung eines Presssitzes angeglichen. Es versteht sich, dass die Nockenteile, die gegebenenfalls zusätzlich vorgesehenen Fügeteile, ein Wellenendstück und/oder der Wellengrundkörper vor dem Fügeprozess vollständig fertigbearbeitet sein können.

Für die Ausführungsform einer Nockenwelle mit konisch ansteigendem Wellenprofil sieht das Verfahren das Einbringen eines entsprechenden Längsprofils, beispielsweise einer Längsverzahnung vorzugsweise durch Walzen vor. Ein stufenförmig ausgebildetes Längsprofil kann durch partielles Walzen auf unterschiedlichen Durchmessern vorgesehen werden.

Zur Erstellung eines Wellengrundkörpers und Nockenteilen mit zueinander komplementären Freimachungen werden vorzugsweise spanabhebende Verfahren für den Wellengrundkörper und Heiß- oder Warmumformverfahren und/oder Stanzverfahren eingesetzt.

Das Verfahren kann weiterhin die Herstellung und Verarbeitung von Zwischenhülsen vorsehen, die mit Spiel über den Bereich der Längsverzahnung überfahren werden, wobei das Nockenteil auf der Zwischenhülse gefügt und ein Presssitz zwischen Wellengrundkörper und Zwischenhülse einerseits und zwischen Nockenteil und Zwischenteil andererseits gebildet wird.

Eine Ausgestaltung des Verfahrens umfasst zumindest nachfolgende Bearbeitungsschritte: Herstellen des Wellengrundköpers mit mehreren feinbearbeiteten, insbesondere geschliffenen Aufnahmebereichen; Herstellen des zumindest einen Nockenteils mit feinbearbeiteten, insbesondere geschliffenen Innenflächen; Herstellen des zumindest einen Hülsenteils mit feinbearbeiteten, insbesondere geschliffenen Innenflächen und einem am Außenumfang angebrachten Längsprofil; Auffädeln des zumindest einen Hülsenteils mit darauf axial verlagerbarem Nockenteil und zumindest einem axial festen Nockenteil in vorgesehener Anzahl und Reihenfolge; Fügen des zumindest einen axial festen Nockenteils und des zumindest einen Hülsenteils.

Die Herstellung der Hülsenteile erfolgt dabei vorzugsweise in einer gegenüber dem Wellengrundkörper verschleißbeständigen Form. Dabei kann Nitrierstahl für die Hülsenteile verwendet werden. Alternativ oder zusätzlich kann eine Oberflächenbehandlung der Hülsenteile wie Nitrierung, Carbonitrierung und/oder eine Form der Oberflächenbehandlung vorgesehen werden.

Das Verfahren zum Fügen der einzelnen Bauteile wie Nockenteile, Hülsenteile und/oder zusätzlich vorgesehenen Fügeteilen kann eine Ausrichtung der zu fügenden Teile in Umfangsrichtung und in axiale Richtung gegenüber dem Wellengrundkörper vorsehen, wobei zwischen Pressflächen des Wellengrundkörpers und den zu fügenden Teilen ein Presssitz durch eine Axialverlagerung der Pressflächen gegeneinander hergestellt wird, wobei das zu fügende Teil in Pressrichtung trichterförmig aufgeweitet sein oder eine Fase besitzen kann. Die Pressfläche des Wellengrundkörpers kann dabei kreisrund feinbearbeitet, insbesondere geschliffen sein. Alternativ oder zusätzlich können Pressflächen vorgesehen werden, die jeweils aus mehreren, axial aufeinanderfolgenden, radial über den übrigen Außendurchmesser des Wellengrundkörpers erhabenen, axial zueinander beabstandeten, umlaufenden Ringe gebildet sind.

Die verschiedenen Ausführungsformen von Nockenwellen und deren Herstellungsverfahren können untereinander kombiniert werden. An einem Ausführungsbeispiel oder einem Herstellungsverfahren offenbarte vorteilhafte Merkmale und detaillierte Darstellungen können auch auf die anderen Ausführungsbeispiele und Herstellungsverfahren übertragen werden. Desweiteren sind unter den Ausführungsbeispielen beschriebene Herstellungsmerkmale und unter den Herstellverfahren beschrieben Vorrichtungsmerkmalen untereinander austauschbar.

Die Erfindung wird anhand der in den Figuren 1 bis 6 dargestellten Ausführungsbeispiele näher erläutert. Dabei zeigen:
Figur 1: einen schematisch dargestellten Ausschnitt einer Nockenwelle,
Figur 2: einen schematisch dargestellten Ausschnitt einer gegenüber der in Figur 1 dargestellten Nockenwelle ähnlichen Nockenwelle,
Figur 3: einen schematisch dargestellten Ausschnitt einer gegenüber den in den Figuren 1 und 2 dargestellten Nockenwellen ähnlichen Nockenwelle,
Figur 4: einen schematisch dargestellten Ausschnitt einer gegenüber den in den Figuren 1 bis 3 dargestellten Nockenwellen ähnlichen Nockenwelle,
Figur 5: einen Querschnitt der in Figur 4 dargestellten Nockenwelle und
Figur 6: eine Ansicht eines auf der Nockenwelle der Figuren 4 und 5 zu fügenden Nockenteils.

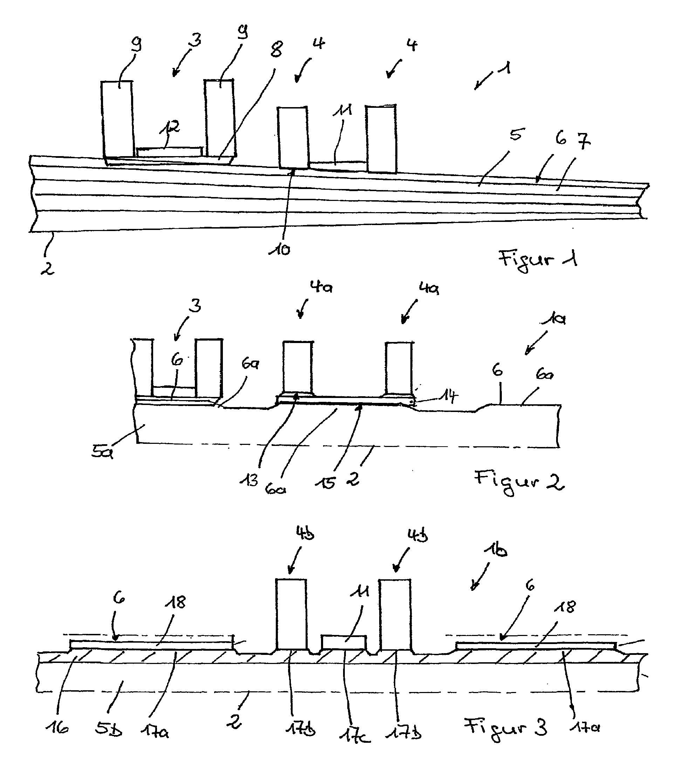

Die Nockenwellen 1, 1a, 1c, 1 d der Figuren 1 bis 4 sind jeweils um die Drehachse 2 angeordnet. Es erfolgt daher lediglich die Darstellung der oberen Hälfte. Die Darstellung ist nicht maßstabsgetreu. Beispielsweise sind zur Darstellung schlecht auflösender Details wie geringfügigen Änderungen von Steigungen, Durchmessern und dergleichen diese überzeichnet dargestellt. Die Anordnung der axial Nockenteile und der gefügten Nockenteile 4, 4a, 4b, 4c ist willkürlich dargestellt. Die benachbarte Darstellung jeweils eines axial verlagerbaren Nockenteils 3 und eines gefügten Nockenteils 4, 4a, 4b, 4c erfolgt ausschließlich zur Erläuterung der Erfindung. In weiteren Ausführungsformen kann die Anzahl und Anordnung der Nockenteile abhängig von der Position der abschaltbaren Zylinder und der Anzahl der Ventile pro Zylinder und somit die Anzahl und Ausgestaltung der Nockenteile sowie von der Anzahl der von der Nockenwelle 1, 1a, 1b, 1c gesteuerten Zylinder variieren.

Figur 1 zeigt einen Ausschnitt der die gebaute Nockenwelle 1 ohne die dazugehörigen Abschlüsse wie beispielsweise einem Wellenendstück zu deren Antrieb. Der einteilige Wellengrundkörper 5 ist konisch ausgebildet und weist ein konisches Längenprofil 6 in Form einer Längsverzahnung 7 auf. Mit der Längsverzahnung 7 ist das axial verlagerbare Nockenteil 3 mittels des Innenprofils 8 wie Innenverzahnung drehfest aufgenommen. An dem Innenprofil 8 sind am Beispiel einer Brennkraftmaschine mit vier Ventilen pro Zylinder zwei Nocken 9 zur Beaufschlagung jeweils eines Ventils vorgesehen. Je nach Ausführung als Einlass- oder Auslassnockenwelle werden mit den Nocken 9 die Auslass oder Einlassventile der Brennkraftmaschine gezielt ausgeschaltet. Dabei erfolgt die axiale Verlagerung des axial verlagerbaren Nockenteils 3 mittels einer nicht dargestellten Stelleinrichtung, wobei an dem Nockenteil 3 entsprechende - nicht dargestellte - Steuerelemente wie Umfangsnuten vorgesehen sind.

Bei einer axialen Verlagerung des Nockenteils 3 variiert infolge der konischen Ausgestaltung des Längsprofils 6 die Überschneidungsfläche von Innenprofil 8 und Längsprofil 6. Die Steigung des Längsprofils wird allerdings so ausgestaltet, dass das nötige Drehmoment mit entsprechender Sicherheit übertragen werden kann. Hierzu haben sich Steigungen zwischen 0,001 und 0,01 als vorteilhaft erwiesen.

Die Nockenteile 4 zur Abschaltung eines - hier - benachbarten Zylinders sind auf dem Außendurchmesser des Längsprofils 6 gefügt. Hierbei kann - wie in der Figur 1 gezeigt - die Innenfläche 10 der Nocken konisch und an die Steigung des Längsprofils 6 angepasst sein. In einem weiteren vorteilhaften Ausführungsbeispiel kann die Innenfläche mit konstantem Durchmesser ausgestaltet sein, so dass während des Fügens der Nockenteile 4 das Längsprofil 6 am größeren Durchmesser leicht plastisch verformt wird. Zur Betätigung zweier Ventile desselben Zylinders sind in dem gezeigten Ausführungsbeispiel zwei Nockenteile 4 axial beabstandet gefügt. Zwischen den beiden Nockenteilen 4 kann ein Lagerring 11 mit konischer oder den zuvor beschriebenen Nockenteilen entsprechender Innenfläche mit gleichmäßigem Innendurchmesser gefügt werden. In entsprechender Weise kann ein Lagerring 12 zwischen den Nocken 9 des Nockenteils 3 vorgesehen sein, wobei die axiale Verlagerung über ein Lager mit Axialspiel erfolgen kann.

Durch die konische Ausführung des Wellengrundkörpers 5 können die einzelnen Nockenteile 3, 4 sowie weitere Nockenteile entsprechend der gewünschten Anordnung aufgezogen beziehungsweise gefügt werden. In dem gezeigten Ausführungsbeispiel wird zuerst das axial verlagerbare Nockenteil 3 auf das Längsprofil 6 aufgezogen und anschließend werden die Nockenteile 4 und der Lagerring 11 beispielsweise mittels eines Pressverfahrens gefügt. Axial benachbart können weitere Nockenteile 3, 4 aufgezogen beziehungsweise gefügt werden, die mit entsprechend geringeren Innendurchmessern versehen sind.

Figur 2 zeigt eine gegenüber der Nockenwelle 1 der Figur 1 veränderte Nockenwelle 1 a mit Aufnahmebereichen 6a mit einem Längsprofil 6, die über den axialen Verlauf des Wellengrundkörpers 5a einen konstanten Durchmesser aufweisen. Insoweit ist die Herstellung des Wellengrundkörpers 5a einfacher und kostengünstiger, da die Aufnahmebereiche 6a einfacher darzustellen sind.

Die axial verlagerbaren Nockenteile 3 können über die gleichartig ausgestalteten Aufnahmebereiche 6a bis zum gewünschten Aufnahmebereich verschoben werden. Die Nockenteile 4a weisen eine Öffnung 13 auf, deren Innendurchmesser größer als der Außendurchmesser der Aufnahmebereiche 6a ist, so dass diese in einfacher Weise über diese geschoben werden können. Die Nockenteile 4a werden auf dem entsprechenden Aufnahmebereich 6a mittels einer Zwischenhülse 14 gefügt. Hierzu wird der Innendurchmesser 15 der Zwischenhülse so ausgestaltet, dass sie axial über die erforderlichen Aufnahmebereiche 6a an die gewünschte Position der zu fügenden Nockenteile 4a geschoben werden kann. Bei dem anschließenden Fügeprozess werden die Nockenteile 4a auf die Zwischenhülse 14 geschoben, wobei sich diese plastisch in die Freimachungen des Längsprofils 6, beispielsweise in die Zahnlücken einer Längsverzahnung verformt und einen Drehschluss sowie eine axiale Ausrichtung zwischen den mittels Presssitz auf die Zwischenhülse 14 gefügten Nockenteilen 4a und dem Wellengrundkörper 5a herstellt. Die Zwischenhülse kann hierzu innen kreisrund bearbeitet, beispielsweise geschliffen sein. Alternativ kann die Zwischenhülse 14 ein zu dem Längsprofil 6 komplementäres Innenprofil wie Innenverzahnung aufweisen.

Figur 3 zeigt eine zu den Nockenwellen 1, 1a der Figuren 1 und 2 alternative Nockenwelle 1 b mit einem Wellengrundkörper 5b, der aus einem Rohrabschnitt 16 hergestellt ist. Alternativ kann der Wellengrundkörper 5b auch aus Vollmaterial hergestellt sein. Im Gegensatz zu den Nockenwellen 1, 1 a der Figuren 1 und 2 ist in dem Wellengrundkörper 5b kein Längsprofil vorgesehen. Vielmehr sind auf gleichem Durchmesser Aufnahmebereiche 17a, 17b, 17c für Hülsenteile 18, die Nockenteile 4b und einen gegebenenfalls vorhandenen Lagerring 11 vorgesehen, die jeweils mittels eines Fügeverfahrens, beispielsweise durch Herstellung eines Presssitzes durch axiales Aufpressen auf die Aufnahmebereiche 17a, 17b, 17c axial und drehfest fixiert werden. Dabei weisen die Hülsenteile 18 ein Längsprofil 6 auf, auf das die nicht dargestellten axial verlagerbaren Nockenteile, die den Nockenteilen 3 der Figuren 1 und 2 entsprechen können, aufgezogen werden. Je nach gewünschter Anordnung werden dabei Hülsenteile 18, Nockenteile 4b und Lagerringe 11 gefügt, wobei die Hülsenteile 18 während des Fügevorgangs die axialen Nockenteile bereits enthalten.

Das in Figur 3 gezeigte Ausführungsbeispiel der Nockenwelle 1 b zeigt einen einfachen und kostengünstigen Fertigungsprozess, bei dem der Wellengrundkörper 5b aus Stahl gefertigt werden kann, der lediglich auf die notwendige Festigkeit und das vorgeschlagenen Fügeverfahren angepasst ist. So eignen sich beispielsweise nicht legierte Stähle wie ST 20, da die verschleißbeanspruchten Längsprofile 6 an den Hülsenteilen vorgesehen werden müssen. Die Verwendung eines Rohrabschnitts spart zudem Gewicht. Durch die Verlagerung des Längsprofils 6 in die Hülsenteile 18 ist der entsprechend der Anforderung des Längsprofils 6 notwendige Verschleißschutz auf die Hülsenteile 18 beschränkt, die im Vergleich zur Masse des Wellengrundkörpers 5b wenig Gewicht aufweisen und daher beispielsweise aus kostenaufwendigem Nitrierstahl hergestellt werden können und entsprechend ihrer geringen Größe auch in einfacher Weise und kostengünstig nitriert, carbonitriert oder in anderer Weise oberflächenbehandelt werden können. Es versteht sich, dass in allen Ausführungsbeispielen die axial verlagerbaren Nockenteile aufgrund ihres mit dem Längsprofil in Formschluss stehenden Innenprofils einen adäquaten Verschleißschutz aufweisen.

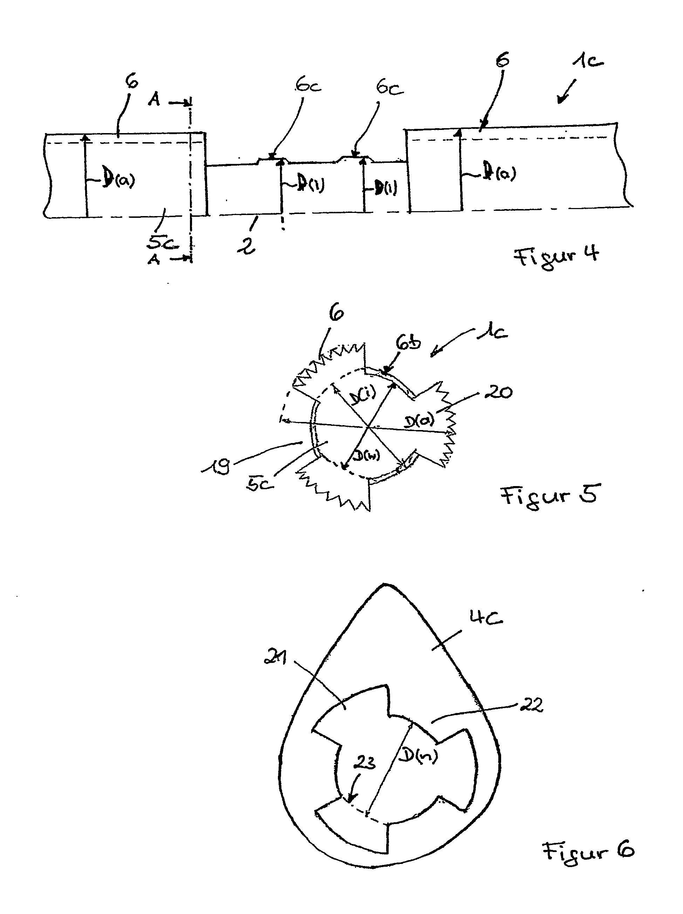

Figur 4 zeigt eine zu den Nockenwellen 1, 1 a, 1 b der Figuren 1 bis 3 alternative Ausgestaltung der Nockenwelle 1c, bei der die nicht dargestellten, gefügten Nockenteile auf einem Aufnahmebereich 6c mit kleinerem Durchmesser D(i) als dem Außendurchmesser D(a) des Längsprofils 6 gefügt werden. Um eine unabhängige Positionierung von axial verlagerbaren Nockenteilen, die auf dem Längsprofil 6 aufgenommen werden und den gefügten Nockenteilen zu erzielen, weist der Wellengrundkörper 5c im Bereich der Längsprofile 6 Freimachungen 19 auf, die aus der Figur 5, die die Nockenwelle 1 c im Querschnitt A-A der Figur 4 zeigt, hervorgehen. Die Freimachungen 19 sind in dem Ausführungsbeispiel der Figuren 4 und 5 als drei über den Umfang verteilte Ausschnitte ausgeführt, so dass drei Kreissegmente 20 mit dem Außendurchmesser D(a) mit dem Längsprofil 6 verbleiben, an dem die axial verlagerbaren Nockenteile aufgenommen werden. Die Freimachungen 19 sind radial innen im Bereich der Aufnahmebereiche 6b auf den Durchmesser D(i) begrenzt, während benachbart zu den Aufnahmebereichen ein noch kleinerer Durchmesser D(w) des Wellengrundkörpers 5c vorgesehen ist.

Die in Figur 6 zu fügenden Nockenteile 4c weisen zu den Freimachungen 19 des Wellengrundkörpers 5c der Figur 5 komplementäre Freimachungen 21 auf, durch die beim Positionieren des Nockenteils 4c die Kreissegmente 21 des Wellengrundkörpers 5c geführt werden. Die verbleibenden Kreissegmente 22 des Nockenteils 4c werden dabei durch die Freimachungen 19 des Wellengrundkörpers 5c geführt und weisen an ihrem Innenumfang Pressflächen 23 auf, die fertig bearbeitet wie geschliffen sind und einen Durchmesser D(n) aufweisen, der zu Herstellung eines Presssitzes mit dem Aufnahmebereich 6c (Figur4) geringfügig kleiner als der Durchmesser D(i) (Figur 4) ist.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombinationen zu beanspruchen. In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombination der rückbezogenen Unteransprüche zu verstehen. Da die Gegenstände der Unteransprüche im Hinblick auf den Stand der Technik am Prioritätstag eigene und unabhängige Erfindungen bilden können, behält sich die Anmelderin vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen. Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen, in Verbindung mit den in der allgemeinen Beschreibung und Ausführungsformen sowie den Ansprüchen beschriebenen und in den Zeichnungen enthaltenen Merkmalen beziehungsweise Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten beziehungsweise Verfahrensschrittfolgen führen, auch soweit sie Herstell-, Prüf- und Arbeitsverfahren betreffen. Eine mögliche Formulierung der Ansprüche ist die folgende: Nockenwelle insbesondere für eine Brennkraftmaschine mit einem drehbar gelagerten Wellengrundkörper mit mehreren Nockenteilen mit jeweils einer Öffnung zur Aufnahme am Wellengrundkörper, wobei zumindest ein Nockenteil drehfest und axial verlagerbar auf einem Längsprofil aufgenommen ist, dadurch gekennzeichnet, dass zumindest ein axial fest anzuordnendes Nockenteil während der Montage längs des Wellengrundkörpers über zumindest einen Aufnahmebereich eines axial verlagerbaren Nockenteils verschoben und anschließend gefügt wird. Eine erste Ausgestaltung der Nockenwelle, dadurch gekennzeichnet, dass axial zwischen zwei axial fest angeordneten Nockenstücken ein Lagerring gefügt ist. Eine zweite Ausgestaltung der Nockenwelle, ggf. nach der ersten Ausgestaltung, dadurch gekennzeichnet, dass die Nockenteile und gegebenenfalls der Lagerring fertig bearbeitet auf den fertig bearbeiteten Wellengrundkörper aufgebracht sind. Eine dritte Ausgestaltung der Nockenwelle, ggf. nach der ersten und/oder der zweiten Ausgestaltung, dadurch gekennzeichnet, dass der Wellengrundkörper zumindest in Abschnitten mit axial verlagerbaren Nockenteilen ein sich konisch erweiterndes Längsprofil aufweist, auf dessen Außenumfang das zumindest eine gefügte Nockenteil gefügt ist und das axial verlagerbare Nockenteil mittels eines zum Längsprofil korrespondierenden Innenprofils in Umfangsrichtung einen Formschluss mit dem Wellengrundkörper bildet. Eine vierte Ausgestaltung der Nockenwelle, ggf. nach der dritten Ausgestaltung, dadurch gekennzeichnet, dass der Fügevorgang ein Pressvorgang ist. Eine fünfte Ausgestaltung der Nockenwelle, ggf. nach der dritten und/oder der vierten Ausgestaltung, dadurch gekennzeichnet, dass das Längsprofil des Wellengrundkörpers und das korrespondierende Innenprofil eine Längsverzahnung sind. Eine sechste Ausgestaltung der Nockenwelle, ggf. nach einer der dritten bis fünften Ausgestaltung, dadurch gekennzeichnet, dass das Innenprofil über dessen axiale Länge einen konstanten Durchmesser aufweist. Eine siebte Ausgestaltung der Nockenwelle, ggf. nach einer der dritten bis sechsten Ausgestaltung, dadurch gekennzeichnet, dass eine Steigung des Konus zwischen 0,01 und 0,001 beträgt. Eine achte Ausgestaltung der Nockenwelle, ggf. nach der siebten Ausgestaltung, dadurch gekennzeichnet, dass die Innenfläche der gefügten Nockenteile über deren axiale Länge einen konstanten Durchmesser aufweist. Eine neunte Ausgestaltung der Nockenwelle, dadurch gekennzeichnet, dass der Wellengrundkörper mehrere Aufnahmebereiche mit Längsprofil gleichen Außendurchmessers aufweist, wobei an einem Aufnahmebereich das zumindest eine axial verlagerbare Nockenteil und an einem weiteren Aufnahmereich zumindest ein gefügtes Nockenteil mittels einer Zwischenhülse mit Radialspiel zu den Aufnahmebereichen und größerem Außendurchmesser als einem Innendurchmesser des Nockenteils gefügt ist. Eine zehnte Ausgestaltung der Nockenwelle, ggf. nach der achten und/oder der neunten Ausgestaltung, dadurch gekennzeichnet, dass die Zwischenhülse mit dem Aufnahmebereich beim Fügevorgang radial verpresst ist. Eine elfte Ausgestaltung der Nockenwelle, ggf. nach einer der achten bis zehnten Ausgestaltung, dadurch gekennzeichnet, dass der Innenumfang der Zwischenhülse kreisrund ist. Eine zwölfte Ausgestaltung der Nockenwelle, ggf. nach einer der achten bis elften Ausgestaltung, dadurch gekennzeichnet, dass die Zwischenhülse ein zu den Längsprofilen komplementäres Innenprofil aufweist. Eine dreizehnte Ausgestaltung der Nockenwelle, ggf. nach der elften Ausgestaltung, dadurch gekennzeichnet, dass die Längsprofile und das Innenprofil Längsverzahnungen sind. Eine vierzehnte Ausgestaltung der Nockenwelle, ggf. nach einer der achten bis dreizehnten Ausgestaltung, dadurch gekennzeichnet, dass eine Außenfläche der Zwischenhülse und eine Innenfläche der gefügten Nockenteile feinbearbeitet, insbesondere geschliffen sind. Eine fünfzehnte Ausgestaltung der Nockenwelle, ggf. nach der ersten oder zweiten Ausgestaltung, dadurch gekennzeichnet, dass der Wellengrundkörper Aufnahmebereiche mit einem äußeren und einem inneren Durchmesser, D(a)) für die Nockenteile aufweist, wobei das zumindest eine axial verlagerbare Nockenteil auf einem auf dem äußeren Durchmesser vorgesehenen Längsprofil aufgenommen ist, zumindest ein Nockenteil auf dem inneren Durchmesser gefügt ist und die gefügten Nockenteile und die Aufnahmebereiche mit dem Längsprofil zueinander komplementäre radiale, über den Umfang verteilte Freimachungen aufweisen. Eine sechzehnte Ausgestaltung der Nockenwelle, ggf. nach der fünfzehnten Ausgestaltung, dadurch gekennzeichnet, dass die gefügten Nockenteile mittels verbleibender Kreissegmente mit einer Pressfläche auf dem inneren Durchmesser einen Presssitz bilden. Eine siebzehnte Ausgestaltung der Nockenwelle, ggf. nach der fünfzehnten oder sechzehnten Ausgestaltung, dadurch gekennzeichnet, dass ein auf dem Wellengrundkörper vorgesehener Durchmesser gegenüber dem inneren Durchmesser verringert ist. Eine achtzehnte Ausgestaltung der Nockenwelle, ggf. nach der ersten oder zweiten Ausgestaltung, dadurch gekennzeichnet, dass der Wellengrundkörper Aufnahmebereiche für das zumindest eine gefügte Nockenteil und für zumindest ein Hülsenteil mit einem an dessen Außendurchmesser vorgesehen Längsprofil aufweist. Eine neunzehnte Ausgestaltung der Nockenwelle, ggf. nach der achtzehnten Ausgestaltung, dadurch gekennzeichnet, dass die Aufnahmebereiche für das zumindest eine gefügte Nockenteil und/oder für das Hülsenteil feinbearbeitet, insbesondere geschliffen sind. Eine zwanzigste Ausgestaltung der Nockenwelle, ggf. nach der achtzehnten oder neunzehnten Ausgestaltung, dadurch gekennzeichnet, dass die Innenfläche des zumindest einen Hülsenteils kreisrund geschliffen ist. Eine einundzwanzigste Ausgestaltung der Nockenwelle, ggf. nach einer der achtzehnten bis zwanzigsten Ausgestaltung, dadurch gekennzeichnet, dass die Innenfläche der Öffnung der gefügten Nockenteile kreisrund geschliffen ist. Eine zweiundzwanzigste Ausgestaltung der Nockenwelle, ggf. nach einer der achtzehnten bis einundzwanzigsten Ausgestaltung, dadurch gekennzeichnet, dass das zumindest eine Hülsenteil und/oder gegebenenfalls der Lagerring auf den Aufnahmebereichen gefügt sind. Eine dreiundzwanzigste Ausgestaltung der Nockenwelle, ggf. nach der zweiundzwanzigsten Ausgestaltung, dadurch gekennzeichnet, dass das zumindest eine Hülsenteil, die gefügten Nockenteile und/oder gegebenenfalls der Lagerring auf die Aufnahmebereiche aufgepresst sind. Eine vierundzwanzigste Ausgestaltung der Nockenwelle, ggf. nach einer der achtzehnten bis dreiundzwanzigsten Ausgestaltung, dadurch gekennzeichnet, dass die Aufnahmebereiche auf gleichem Außendurchmesser vorgesehen sind. Eine fünfundzwanzigste Ausgestaltung der Nockenwelle, ggf. nach einer der achtzehnten bis vierundzwanzigsten Ausgestaltung, dadurch gekennzeichnet, dass das zumindest eine Hülsenteil verschleißfest ausgebildet ist. Eine sechsundzwanzigste Ausgestaltung der Nockenwelle, ggf. nach der fünfundzwanzigsten Ausgestaltung, dadurch gekennzeichnet, dass das zumindest eine Hülsenteil aus Nitrierstahl gefertigt ist. Eine siebenundzwanzigste Ausgestaltung der Nockenwelle, ggf. nach einer der fünfundzwanzigsten oder sechsundzwanzigsten Ausgestaltung, dadurch gekennzeichnet, dass das zumindest eine Hülsenteil oberflächenbehandelt ist. Eine achtundzwanzigste Ausgestaltung der Nockenwelle, ggf. nach einer der achtzehnten bis siebenundzwanzigsten Ausgestaltung, dadurch gekennzeichnet, dass der Wellengrundkörper aus nicht oder niedrig legiertem Stahl hergestellt ist. Eine neunundzwanzigste Ausgestaltung der Nockenwelle, ggf. nach einer der vorhergehenden Ausgestaltungen, dadurch gekennzeichnet, dass der Wellengrundkörper aus einem Rohrabschnitt hergestellt ist. Eine dreißigste Ausgestaltung der Nockenwelle, ggf. nach einer der achtzehnten bis neunundzwanzigsten Ausgestaltung, dadurch gekennzeichnet, dass das zumindest eine axial verlagerbare Nockenteil drehfest und axial verlagerbar auf dem Längsprofil des zumindest einen Hülsenteils aufgenommen ist. Eine einunddreißigste Ausgestaltung der Nockenwelle, nach einer der vorhergehenden Ausgestaltungen, dadurch gekennzeichnet, dass das zumindest eine axial verlagerbare Nockenteil aus zwei zueinander axial beabstandeten Nocken und einem beiden gemeinsamen, komplementär zu dem Längsprofil ausgebildeten Innenprofil gebildet ist. Eine zweiunddreißigste Ausgestaltung der Nockenwelle, nach einer der vorhergehenden Ausgestaltungen, dadurch gekennzeichnet, dass zumindest ein weiteres Fügeteil auf der Nockenwelle vorgesehen ist. Eine erste Ausgestaltung des Verfahrens zur Herstellung einer gebauten Nockenwelle bestehend aus einem Wellengrundkörper, zumindest einem axial auf dem Wellengrundkörper verlagerbaren und zumindest einem axial fest auf dem Wellengrundkörper angeordneten Nockenteil, gekennzeichnet durch zumindest nachfolgende Bearbeitungsschritte: Herstellen des Wellengrundköpers in fertig bearbeiteter Form; Herstellung der Nockenteile und gegebenenfalls eines zusätzlich vorgesehenen Fügeteils in zumindest am Fügedurchmesser fertig bearbeiteter Form; Einbringung eines Längsprofils zur drehfesten Aufnahme des zumindest einen axial verlagerbaren Nockenteils; Aufbringen zumindest einer Aufnahmefläche für das axial feste Nockenteil; Einbringen zumindest eines axial festen Nockenteils durch axiales Überfahren eines Bereiches des Längsprofils eines axial verlagerbaren Nockenteils; Fügen des zumindest einen axial festen Nockenteils; Aufschieben des zumindest einen axial verlagerbaren Nockenteils auf das Längsprofil. Eine zweite Ausgestaltung des Verfahrens nach der ersten Ausgestaltung, gekennzeichnet durch ein Vorsehen von Öffnungen in den Nockenteilen mit einem größeren oder gleichen Durchmesser wie des zu überfahrenden Bereichs des Längsprofils. Eine dritte Ausgestaltung des Verfahrens nach der ersten oder zweiten Ausgestaltung, gekennzeichnet durch eine Herstellung eines konisch oder stufenförmig ansteigenden Längsprofils. Eine vierte Ausgestaltung des Verfahrens ggf. nach der ersten Ausgestaltung, gekennzeichnet durch ein Vorsehen von Öffnungen in den Nockenteilen mit über den Umfang verteilten, radial erweiterten Ausschnitten und radial zu diesen komplementären radialen Einschnitten in das Längsprofil des zu überfahrenden Bereichs. Eine fünfte Ausgestaltung des Verfahrens, ggf. nach der ersten Ausgestaltung, gekennzeichnet durch Zwischenhülsen, die mit Spiel über den Bereich des Längsprofils überfahren werden, wobei das Nockenteil auf der Zwischenhülse gefügt und ein Presssitz zwischen Wellengrundkörper und Zwischenhülse einerseits und zwischen Nockenteil und Zwischenteil andererseits gebildet wird. Eine alternative oder ergänzende erste Ausgestaltung zur ersten Ausgestaltung des Verfahrens zur Herstellung einer gebauten Nockenwelle bestehend aus einem Wellengrundkörper, zumindest einem axial auf dem Wellengrundkörper verlagerbaren und zumindest einem axial fest auf dem Wellengrundkörper angeordneten Nockenteil gekennzeichnet durch zumindest nachfolgende Bearbeitungsschritte: Herstellen des Wellengrundköpers mit mehreren feinbearbeiteten, insbesondere geschliffenen Aufnahmebereichen; Herstellen des zumindest einen Nockenteils mit feinbearbeiteten, insbesondere geschliffenen Innenflächen; Herstellen des zumindest einen Hülsenteils mit feinbearbeiteten, insbesondere geschliffenen Innenflächen und einem am Außenumfang angebrachten Längsprofil; Auffädeln des zumindest einen Hülsenteils mit darauf axial verlagerbarem Nockenteil und zumindest einem axial festen Nockenteil in vorgesehener Anzahl und Reihenfolge; Fügen des zumindest einen axial festen Nockenteils und des zumindest einen Hülsenteils. Eine zweite Ausgestaltung zur alternativen oder ergänzenden ersten Ausgestaltung, gekennzeichnet durch eine gegenüber dem Wellengrundkörper verschleißbeständige Herstellung des zumindest einen Hülsenteils. Eine dritte Ausgestaltung zur zweiten Ausgestaltung zur alternativen oder ergänzenden ersten Ausgestaltung, gekennzeichnet durch eine Verwendung von Nitrierstahl für das zumindest eine Hülsenteil. Eine vierte Ausgestaltung zur zweiten oder dritten Ausgestaltung zur alternativen oder ergänzenden ersten Ausgestaltung, gekennzeichnet durch eine Oberflächenbehandlung des zumindest einen Hülsenteils. Eine fünfte Ausgestaltung, ggf. zu einer der ersten bis vierten Ausgestaltung zur alternativen oder ergänzenden ersten Ausgestaltung, gekennzeichnet durch eine Nitrierung oder Carbonitrierung des zumindest einen Hülsenteils. Eine weitere Ausgestaltung zu einer der vorhergehenden Ausgestaltungen des Verfahrens, gekennzeichnet durch ein Fügeverfahren, bei dem eine Ausrichtung der zu fügenden Teile in Umfangsrichtung und in axiale Richtung gegenüber dem Wellengrundkörper erfolgt und zwischen Pressflächen des Wellengrundkörpers und den zu fügenden Teilen ein Presssitz durch eine Axialverlagerung der Pressflächen gegeneinander hergestellt wird, wobei das zu fügende Teil in Pressrichtung trichterförmig aufgeweitet ist oder ein Fase besitzt. Eine weitere Ausgestaltung zu einer der vorhergehenden Ausgestaltungen des Verfahrens, dadurch gekennzeichnet, dass die Pressfläche des Wellengrundkörpers kreisrund feinbearbeitet, insbesondere geschliffen ist. Eine weitere Ausgestaltung zu einer der vorhergehenden Ausgestaltungen des Verfahrens, dadurch gekennzeichnet, dass die Pressfläche des Wellengrundkörpers aus mehreren, axial aufeinanderfolgenden, radial über den übrigen Außendurchmesser des Wellengrundkörpers erhabenen, axial zueinander beabstandeten, umlaufenden Ringen gebildet ist.

## Patentansprüche

1. Nockenwelle (1) insbesondere für eine Brennkraftmaschine mit einem drehbar gelagerten Wellengrundkörper (5) mit mehreren Nockenteilen mit jeweils einer Öffnung zur Aufnahme am Wellengrundkörper, wobei zumindest ein Nockenteil (3) drehfest und axial verlagerbar auf einem Längsprofil (6) aufgenommen ist, wobei zumindest ein axial fest anzuordnendes Nockenteil (4) während der Montage längs des Wellengrundkörpers (5) über zumindest einen Aufnahmebereich eines axial verlagerbaren Nockenteils (3) verschoben und anschließend gefügt wird,
**dadurch gekennzeichnet,**
**dass** der Wellengrundkörper (5) zumindest in Abschnitten mit axial verlagerbaren Nockenteilen (3) ein sich konisch erweiterndes Längsprofil (6) aufweist, auf dessen Außenumfang das zumindest eine gefügte Nockenteil (4) gefügt ist und das axial verlagerbare Nockenteil (3) mittels eines zum Längsprofil (6) korrespondierenden Innenprofils (8) in Umfangsrichtung einen Formschluss mit dem Wellengrundkörper (5) bildet.

2. Nockenwelle (1) nach Anspruch 1, **dadurch gekennzeichnet, dass** das zumindest eine axial verlagerbare Nockenteil (3) aus zwei zueinander axial beabstandeten Nocken (9) und einem beiden gemeinsamen, komplementär zu dem Längsprofil (6) ausgebildeten Innenprofil (8) gebildet ist.

3. Verfahren zur Herstellung einer gebauten Nockenwelle (1) bestehend aus einem Wellengrundkörper (5), zumindest einem axial auf dem Wellengrundkörper (5) verlagerbaren (3) und zumindest einem axial fest auf dem Wellengrundkörper (5) angeordneten Nockenteil (4), **gekennzeichnet durch** zumindest nachfolgende Bearbeitungsschritte:
- Herstellen des Wellengrundköpers (5) in fertig bearbeiteter Form;
- Herstellung der Nockenteile (3, 4) und gegebenenfalls eines zusätzlich vorgesehenen Fügeteils in zumindest am Fügedurchmesser fertig bearbeiteter Form;
- Einbringung eines konisch oder stufenförmig ansteigenden Längsprofils (6) zur drehfesten Aufnahme des zumindest einen axial verlagerbaren Nockenteils (3);
- Aufbringen zumindest einer Aufnahmefläche für das axial feste Nockenteil (4);
- Einbringen zumindest eines axial festen Nockenteils (4) **durch** axiales Überfahren eines Bereiches des Längsprofils (6) eines axial verlagerbaren Nockenteils (3);
- Fügen des zumindest einen axial festen Nockenteils (4);
- Aufschieben des zumindest einen axial verlagerbaren Nockenteils (3) auf das Längsprofil (6).

4. Verfahren nach Anspruch 3, **gekennzeichnet durch** ein Vorsehen von Öffnungen (21) in den Nockenteilen (3, 4) mit einem größeren oder gleichen Durchmesser wie des zu überfahrenden Bereichs des Längsprofils (6).

5. Verfahren nach einem der Ansprüche 3 bis 4, **gekennzeichnet durch** ein Fügeverfahren, bei dem eine Ausrichtung der zu fügenden Teile in Umfangsrichtung und in axiale Richtung gegenüber dem Wellengrundkörper erfolgt und zwischen Pressflächen des Wellengrundkörpers und den zu fügenden Teilen ein Presssitz durch eine Axialverlagerung der Pressflächen gegeneinander hergestellt wird, wobei das zu fügende Teil in Pressrichtung trichterförmig aufgeweitet ist oder ein Fase besitzt.

## Claims

1. A camshaft (1), particularly for use in an internal combustion engine, having a rotatably mounted shaft base body (5) with a plurality of cam parts, each having an opening for its reception on the shaft base body, wherein at least one cam part (3) is received so as to be rotationally fixed and axially displaceable on a longitudinal profile (6),
wherein the at least one cam part (4) that is to be axially fixed during assembly is pushed along the shaft base body (5) acro ss at least one receiving area for an axially displaceable cam part (3) and then secured,
**characterized in that**
the shaft base body (5) has, at least on sections having axially displaceable cam parts (3), a conically expanding longitudinal profile (6) on whose outside circumference the at least one secured cam part (4) is secured, and the axially displaceable cam part (3) forms a positive lock with the shaft base body (5) in the circumferential direction by means of an internal profile (8) corresponding to the longitudinal profile (6).

2. Camshaft (1) according to claim 1, **characterized in that** the at least one axially displaceable cam part (3) is formed from two cams (9) axially spaced apart from each other and an internal profile (8) that is configured common to both cams and in addition to the longitudinal profile (6).

3. Method for the production of an assembled camshaft (1) comprising a shaft base body (5), at least one axially displaceable cam part (3) on the shaft base body (5) and at least one axially fixed cam part (4) on the shaft base body (5), **characterized by** at least the following processing steps:
- manufacture of the shaft base body (5) in finished form;
- manufacture of the cam parts (3, 4) and possibly an additionally provided assembly part in finished form at least on the diameter of joint;
- installation of a longitudinal profile (6) that expands conically or in steps for rotationally fixed reception of the at least one axially displaceable cam part (3);
- attachment of at least one receiving surface for the axially fixed cam part (4);
- installation of at least one axially fixed cam part (4) by axially traversing an area of the longitudinal profile (6) of an axially displaceable cam part (3);
- securing of the at least one axially fixed cam part (4);
- sliding of the at least one axially displaceable cam part (3) onto the longitudinal profile (6).

4. Method according to claim 3, **characterized by** a provision of openings (21) in the cam parts (3, 4), wherein these openings are of a larger diameter than or equal diameter to the area of the longitudinal profile (6) to be traversed.

5. Method according to one of the claims 3 to 4, **characterized by** a joining process in which an alignment of the parts to be secured takes place in the circumferential direction and in the axial direction relative to the shaft base body, and an axial displacement of the press surfaces toward one another produces a press fit between the press surfaces of the shaft base body and the parts to be secured, wherein the part to be secured is widened to create a funnel shape in the press direction or possesses a chamfer

## Revendications

1. Arbre à cames (1), en particulier pour un moteur à combustion interne, avec un corps de base d'arbre (5) monté rotatif et doté de plusieurs pièces de came pourvues chacune d'une ouverture pour leur réception sur le corps de base d'arbre, sachant qu'au moins une pièce de came (3) est reçue solidaire en rotation et axialement mobile sur un profil longitudinal (6),
sachant qu'au moins une pièce de came (4), à disposer axialement fixe, est déplacée pendant le montage le long du corps de base d'arbre (5) au-dessus d'au moins une région réceptrice d'une pièce de came (3) axialement mobile, puis est assemblée,
**caractérisé en ce que**
le corps de base d'arbre (5) présente, au moins dans des tronçons pourvus de pièces de came (3) axialement mobiles, un profil longitudinal (6) s'élargissant coniquement, sur le pourtour extérieur duquel est assemblée la pièce de came assemblée (4) au moins unique, et la pièce de came (3) axialement mobile forme, au moyen d'un profil intérieur (8) correspondant au profil longitudinal (6), une liaison positive en direction périphérique avec le corps de base d'arbre (5).

2. Arbre à cames (1) selon la revendication 1, **caractérisé en ce que** la pièce de came (3) axialement mobile au moins unique est formée de deux cames (9) axialement distantes entre elles et d'un profil intérieur (8) commun aux deux cames, réalisé complémentaire du profil longitudinal (6).

3. Procédé de fabrication d'un arbre à cames composé (1) constitué d'un corps de base d'arbre (5), d'au moins une pièce de came (3) axialement mobile sur le corps de base d'arbre (5) et d'au moins une pièce de came (4) disposée axialement fixe sur le corps de base d'arbre (5), **caractérisé par** au moins les étapes d'usinage suivantes :
- fabrication du corps de base d'arbre (5) sous une forme définitivement usinée ;
- abrication des pièces de came (3, 4) et le cas échéant d'une pièce d'assemblage prévue en plus sous une forme définitivement usinée au moins au diamètre d'assemblage ;
- installation d'un profil longitudinal (6) à ascendance conique ou échelonnée pour recevoir en solidarité de rotation la pièce de came (3) axialement mobile au moins unique ;
- réalisation d'au moins une surface réceptrice pour la pièce de came (4) axialement fixe ;
- installation d'au moins une pièce de came (4) axialement fixe en passant axialement au-dessus d'une région du profil longitudinal (6) d'une pièce de came (3) axialement mobile ;
- assemblage de la pièce de came (4) axialement fixe au moins unique ;
- enfilage de la pièce de came (3) axialement mobile au moins unique sur le profil longitudinal (6).

4. Procédé selon la revendication 3, **caractérisé en ce qu'**il est prévu dans les pièces de came (3, 4) des ouvertures (21) de diamètre supérieur ou égal à la région à outrepasser du profil longitudinal (6).

5. Procédé selon la revendication 3 ou 4, **caractérisé par** une méthode d'assemblage selon laquelle on effectue un alignement des pièces à assembler en direction périphérique et en direction axiale par rapport au corps de base d'arbre, et on réalise un ajustement serré entre des surfaces de pression du corps de base d'arbre et des pièces à assembler par un déplacement axial des surfaces de pression les unes par rapport aux autres, sachant que la pièce à assembler est élargie en entonnoir dans la direction de pression ou possède un chanfrein.
